# EUROPÄISCHE PATENTSCHRIFT

(11) **EP 0 841 545 B1**
(45) Veröffentlichungstag und Bekanntmachung des Hinweises auf die Patenterteilung: **28.04.1999**
(21) Anmeldenummer: 97810765.4
(22) Anmeldetag: 10.10.1997
(51) Int. Cl.: G01F 1/32, G01P 5/01

(54) **Wirbelströmungsaufnehmer**
Vortex flow sensor
Capteur de débit à tourbillon

(30) Priorität: 08.11.1996 EP 96117892
(43) Veröffentlichungstag der Anmeldung: 13.05.1998
(73) Patentinhaber: Endress + Hauser Flowtec AG, CH-4153 Reinach BL 1 (CH)
(72) Erfinder: Fröhlich, Thomas, Dr.-Ing., 4058 Basel (CH); Kerrom, Roger, Dipl.-Ing., 79540 Lörrach (DE)
(74) Vertreter: Morstadt, Volker, Dipl.-Ing.

(56) Entgegenhaltungen:
- EP-A- 0 240 100
- WO-A-94/08211
- DE-A- 3 544 198
- DE-C- 4 143 202
- US-A- 5 347 873
- PATENT ABSTRACTS OF JAPAN vol. 007, no. 035 (P-175), 10.Februar 1983 & JP 57 189015 A (YOKOGAWA DENKI SEISAKUSHO KK), 20.November 1982,

## Beschreibung

Die Erfindung betrifft einen Wirbelströmungsaufnehmer zur Messung der Strömungsgeschwindigkeit oder des Volumendurchflusses eines in einem Meßrohr in einer Strömungsrichtung fließenden Fluids mit einem über einem Durchmesser des Meßrohrs angeordneten Staukörper, der der Erzeugung Kármán'scher Wirbel dient.

Bei Betrieb eines derartigen Wirbelströmungsaufnehmer entsteht bekanntlich stromabwärts des Staukörpers eine Kármán'sche Wirbelstraße, deren Druckschwankungen von einem Wirbelsensor in ein elektrisches Signal umgeformt werden, dessen Frequenz proportional zum Volumendurchfluß ist.

In der GB-A 14 83 818 ist ein Wirbelströmungsaufnehmer zur Messung der Strömungsgeschwindigkeit oder des Volumendurchflusses eines in einem Meßrohr in einer Strömungsrichtung fließenden Fluids beschrieben
- mit einem entlang eines Durchmessers des Meßrohrs angeordneten Staukörper, der der Erzeugung Kármán'scher Wirbel dient, und
- mit einem auf von den Wirbeln erzeugte Druckschwankungen ansprechenden Wirbelsensor, der stromabwärts vom Staukörper in eine wandseitige Öffnung des Meßrohrs, diese zu dessen Mantelfläche hin abdichtend, eingesetzt und kürzer als der Durchmesser ist.

In der US-A 47 16 770 ist zur Messung der Strömungsgeschwindigkeit und/oder des Volumendurchflusses eines in einem Meßrohr in einer Strömungsrichtung fließenden Fluids ein Wirbelströmungsaufnehmer beschrieben
- mit einem entlang eines Durchmessers des Meßrohrs angeordneten und an jedem Ende mit dem Meßrohr verbundenen Staukörper, der der Erzeugung Kármán'scher Wirbel dient und eine in Richtung dieses Durchmessers sowie durch das Meßrohr hindurch verlaufende Hauptbohrung und mindestens eine die Hauptbohrung mit dem Fluid verbindende Nebenbohrung aufweist,
- mit einem kapazitiven, auf von den Wirbeln erzeugte Druckschwankungen ansprechenden Wirbelsensor, der in die Hauptbohrung, diese gegen das Fluid abdichtend, eingesetzt ist und der folgende Merkmale aufweist:
   -- eine endseits verschlossene, biegsame, als erste Elektrode dienende äußere Sensorhülse und
   -- eine darin angeordnete, biegsame innere Sensorhülse, die endseits mindestens eine zweite Elektrode trägt.

Schließlich ist in der EP-A 549 945 beschrieben ein Wirbelströmungsaufnehmer zur Messung der Strömungsgeschwindigkeit und/oder des Volumendurchflusses eines in einem Meßrohr in einer Strömungsrichtung fließenden Fluids
- mit einem Wirbelsensor, der in eine wandseitige Öffnung des Meßrohrs, diese zu dessen Mantelfläche hin abdichtend, eingesetzt ist und der folgende Merkmale aufweist:
   -- ein die Öffnung überdeckendes, im Bereich der Öffnnung zu einer Membran verdünntes Lager mit einer fluid-zugewandten ersten Oberfläche und einer fluid-abgewandten zweiten Oberfläche,
   -- ein an der ersten Oberfläche der Membran befestigtes erstes Ende eines biegesteifen Balkens, und
   -- ein an der zweiten Oberfläche der Membran befestigtes zweites Ende des Balkens, und
   -- ein mit dem zweiten Ende des Balkens zusammenwirkendes, an einem Gehäuse befestigtes Sensorelement für Bewegungen des zweiten Endes,
      --- welche Enden so dimensioniert sind, daß sie auf die Membran entgegegengesetzt gleiche Drehmomente ausüben.

Wie die referierte GB-A 14 83 818 und die referierte US-A 47 16 770 zeigen, kann der Wirbelsensor entweder im Staukörper oder getrennt davon in der Öffnung der Wand des Meßrohrs angeordnet werden. Einerseits im Hinblick auf die Senkung der Produktionskostens der Wirbelströmungsaufnehmer und andererseits im Hinblick auf die Typisierung von deren Teilen ist nun ein Wirbelsensor wünschenswert, der nicht nur in den Staukörper (wie bei der US-A 47 16 770), sondern auch in die Wand des Meßrohrs (wie bei der GB-A 14 83 818) einsetzbar ist.

Eine der Erfindung zugrundeliegende Aufgabe besteht daher darin, einen Wirbelströmungsaufnehmer mit einem innerhalb des Staukörpers angeordneten Wirbelsensor und einen Wirbelströmungsaufnehmer mit einem in der Wand des Meßrohrs fixierten Wirbelsensor anzugeben, wobei die jeweiligen Wirbelsensoren einen weitgehend identischen Aufbau haben sollen und als selbständiges Bauteil nach Art eines Moduls hergestellt werden können.

Dies wird durch die in den beiden unabhängigen Ansprüchen definierten beiden Varianten der Erfindung erreicht.

Ein Vorteil der Erfindung besteht darin, daß der Wirbelsensor weitgehend unempfendlich gegenüber von außen einwirkenden Vibrationen ist.

Die Erfindung und weitere Vorteile werden nun anhand von Ausführungsbeispielen näher erläutert, die in den Figuren der Zeichnung dargestellt sind. Gleiche Teile sind in unterschiedlichen Figuren mit denselben Bezugszeichen bezeichnet, jedoch, wenn es die Übersichtlichkeit erfordert, weggelassen.
- Fig. 1: zeigt in Strömungsrichtung gesehen perspektivisch und teilweise aufgeschnitten einen Wirbelströmungsaufnehmer mit in der Wand des Meßrohrs fixiertem Wirbelsensor entsprechend der ersten Variante der Erfindung,
- Fig. 2: zeigt gegen die Strömungsrichtung gesehen perspektivisch und teilweise aufgeschnitten den Wirbelströmungsaufnehmer von Fig. 1,
- Fig. 3: zeigt im Längsschnitt einen in der Wand des Meßrohrs entsprechend den Fig. 1 und 2 zu fixierenden Wirbelsensor,
- Fig. 4: zeigt einen Längschnitt des Wirbelsensors nach Fig. 3, entlang von deren Linie I - I geschnitten und in Richtung der Pfeile I gesehen,
- Fig. 5: zeigt einen ersten Querschnitt des Wirbelsensors nach Fig. 3, entlang von deren Linie II - II geschnitten und in Richtung der Pfeile II gesehen,
- Fig. 6: zeigt einen Längsschnitt des Ausschnitts IV von Fig. 3 in dazu leicht vergrößertem Maßstab,
- Fig. 7: zeigt einen zweiten Querschnitt des Wirbelsensors nach Fig. 3, entlang von deren Linie III - III geschnitten und in Richtung der Pfeile III gesehen sowie mit dem Maßstab von Fig. 6,
- Fig. 8: zeigt im Längsschnitt einen in den Staukörper des Meßrohrs einzusetzenden Wirbelsensor entsprechend der zweiten Variante der Erfindung,
- Fig. 9: zeigt einen Längschnitt des Wirbelsensors nach Fig. 8, entlang von deren Linie I - I geschnitten und in Richtung der Pfeile I gesehen,
- Fig. 10: zeigt einen ersten Querschnitt des Wirbelsensors nach Fig. 8, entlang von deren Linie II - II geschnitten und in Richtung der Pfeile II gesehen,
- Fig. 11: zeigt einen Längsschnitt des Ausschnitts IV von Fig. 8 in dazu leicht vergrößertem Maßstab, und
- Fig. 12: zeigt einen zweiten Querschnitt des Wirbelsensors nach Fig. 8, entlang von deren Linie III - III geschnitten und in Richtung der Pfeile III gesehen sowie mit dem Maßstab von Fig. 11.

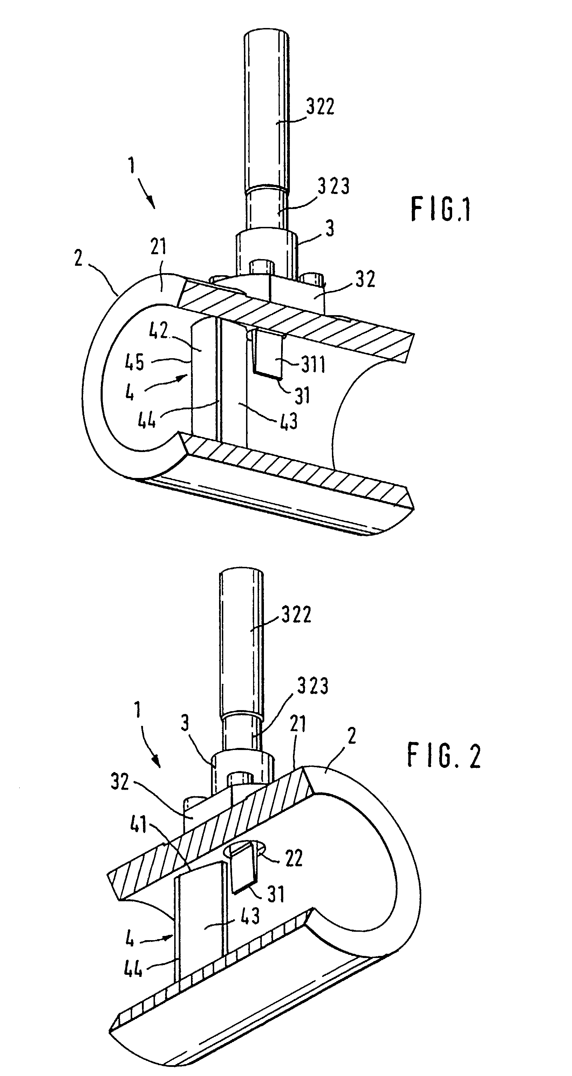

Die in den Fig. 1 und 2 dargestellten und der Übersicht dienenden perspektivischen Ansichten zeigen, einmal in und einmal gegen die Strömungsrichtung gesehen, einen teilweise aufgeschnittenen Wirbelströmungsaufnehmer 1 mit einem in und an einer Wand 21 eines Meßrohrs 2 fixierten kapazitiven Wirbelsensor 3.

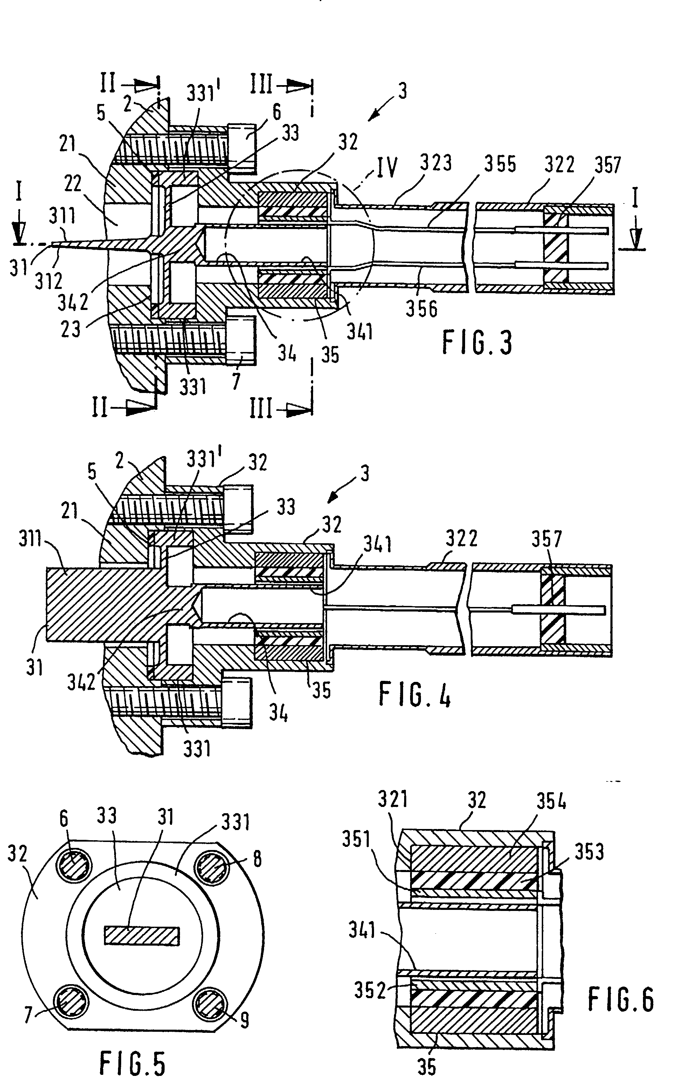

Vom Wirbelsensor 3 ist in den Fig. 1 und 2 nur ein in das Innere des Meßrohrs 2 durch eine Öffnung 22 in der Wand 21 ragende biegesteife, dünne Sensorfahne 31 mit zwei ebenen Hauptflächen sowie eine Gehäusekappe 32 zu sehen; von den beiden Hauptflächen ist in Fig. 1 nur die Hauptfläche 311 - wie auch in Fig. 4 - sichtbar, während aus Fig. 3 eine jeweilige Schnittlinie der Hauptflächen 311, 312 hervorgeht. Die Gehäusekappe läuft unter Einfügung eines dünner-wandigen Zwischenstücks 323 in eine Verlängerung 322 aus, deren jeweilige Einzelheiten unten erläutert sind.

Entlang eines Durchmessers des Meßrohrs 2 ist in dessen Innerem ein Staukörper 4 angeordnet, der mit dem Meßrohr 2 unter Bildung einer dargestellten ersten Fixierstelle 41 und einer verdeckten zweiten Fixierstelle fest verbunden ist. Es ist auch möglich, auf eine der Fixierstellen zu verzichten. Das Zentrum der Öffnung 22 und das Zentrum der Fixierstelle 41 liegen auf einer Mantellinie des Meßrohrs.

Der Staukörper 4 hat eine Prallfläche 42, gegen die im Betrieb ein zu messendes Fluid, z.B. eine Flüssigkeit, ein Gas oder ein Dampf, anströmt, und zwei Seitenflächen, von denen lediglich eine (vordere) Seitenfläche 43 in den Fig. 1 und 2 zu sehen ist. Von der Prallfläche 42 und den Seitenflächen werden zwei Abrißkanten gebildet, von denen lediglich eine (vordere) Abrißkante 44 vollständig und eine (hintere) Abrißkante 45 andeutungsweise in Fig. 1 zu sehen sind.

Durch das Anströmen des Fluids gegen die Prallfläche 42 bildet sich stromabwärts vom Staukörper 4 eine Kármán'sche Wirbelstraße im Fluid dadurch aus, daß an jeder Abrißkante abwechselnd Wirbel abreißen und vom strömenden Fluid mitgenommen werden.

Diese Wirbel erzeugen lokale Druckschwankungen im Fluid, die mittels des Wirbelsensors 3 in elektrische Signale umgeformt werden und deren zeitbezogene Abriß-Häufigkeit, also deren sogenannte Wirbelfrequenz, ein Maß für den Volumendurchfluß und/oder die Strömungsgeschwindigkeit des Fluids ist.

Die Form und der Querschnitt des Staukörpers 4 der Fig. 1 und 2 sind im wesentlichen die einer geraden Dreieck-Säule, also einer Säule mit einem dreieckigen Querschnitt. Es können jedoch auch andere übliche Formen des Staukörpers bei der Erfindung eingesetzt werden.

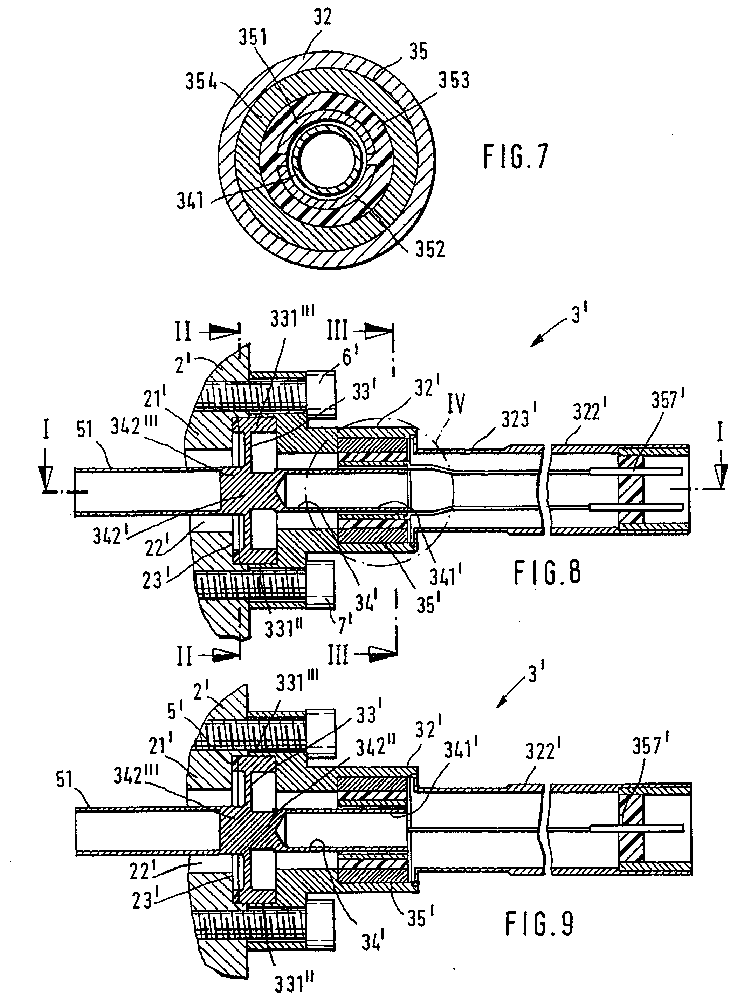

Weitere Einzelheiten des kapazitiven Wirbelsensors 3 nach den Fig. 1 und 2 sind in den Fig. 3 bis 7 dargestellt, und zwar jeweils in Form einer Schnittdarstellung. So zeigen die Fig. 3 und 4 den Wirbelsensor in zwei zueinander um 90° versetzten Längsschnitten, die Fig. 5 und 7 zwei Querschnitte und die Fig. 6 ein Detail des Längsschnitts der Fig. 3 in leicht vergrößertem Maßstab.

In den Fig. 3 bis 7 hat der kapazitive Wirbelsensor 3 eine die Öffnung 22 in der Wand 21 des Meßrohrs 2 überdeckende Membran 33. Diese Membran hat eine fluid-zugewandte erste Oberfläche und eine fluid-abgewandte zweite Oberfläche. Die Membran 33 verschließt die Öffnung 22 fluiddicht, so daß selbst bei einem höchsten zulässigen Fluiddruck kein Fluid zur Mantelfläche 21 des Meßrohrs 2 gelangen kann.

Dies geschieht z.B. mittels einer ringförmigen Dichtung 5, die zwischen einer in der Wand 21 von außen her, z.B. durch Fräsen, gebildeten ebenen Auflagefläche 23 und einem ringförmigen Rand 331 der Membran 33 eingesetzt ist. Der Rand 331 ist höher als die Dicke der Membran 33.

An der ersten Oberfläche der Membran 33 ist die Sensorfahne 31 befestigt, die kürzer als der Durchmesser des Meßrohrs 2 ist. Die ebenen Hauptflächen 311, 312 fluchten mit der Mantellinie des Meßrohrs 2 und können, wie in den Fig. 1 und 2 andeutungsweise zu sehen ist, einen kleinen Keil bilden.

An der zweiten Oberfläche der Membran 33 ist eine hülsen-förmige erste Elektroden-Anordnung 34 befestigt, die mindestens eine Elektrode 341 umfaßt. An der Übergangsstelle der ersten Elektroden-Anordnung 34 zur Membran 33 befindet sich ein massives Übergangsstück 342, das etwa so hoch wie der fluid-abgewandte Teil 331' des Randes 331 der Membran 33 ist und dessen Durchmesser etwa gleich dem Innen-Durchmesser der Hülse der ersten Elektroden-Anordnung 34 ist.

Die Gehäusekappe 32 umschließt die erste Elektroden-Anordnung 34 und die Membran 33 und ist, z.B. mittels vier Schrauben 6, 7, 8, 9, am Meßrohr 2 befestigt. Die Gehäusekappe 32 enthält eine zweite Elektroden-Anordnung 35 mit einer ersten und einer zweiten Gegenelektrode 351, 352. die jeweils etwa halbkreis-förmig ausgebildet sind.

Die zweite Elektroden-Anordnung 35 wird bevorzugt als Vorfertigungsteil hergestellt, das nach seiner Fertigstellung in einer entsprechenden Sackbohrung 321 der Gehäusekappe 32, z.B. durch Einschrumpfen, mittels eines Preßsitzes oder durch Schweißen, fixiert wird.

Die zweite Elektroden-Anordnung 35 umfaßt, von innen nach außen gesehen, die beiden Gegenelektroden 351, 352, einen Isoliermaterialring 353 und einen Metallring 354, der in der Sackbohrung 321 der Gehäusekappe 32 sitzt.

Von jeder Gegenelektrode 351, 352 führt eine jeweilige Verbindungsleitung 355, 356 zu einer Stecker-Anordnung 357, die am Ende einer rohr-artigen Verlängerung 322 der Gehäusekappe 32 angeordnet ist und über die die von der Elektrode 341 und den Gegenelektroden 351, 352 gebildeten Kapazitäten mit einer nicht dargestellten Meßschaltung verbunden werden können.

Die Verlängerung 322 ist mit den übrigen Teilen der Gehäusekppe 32 über ein dünner-wandiges, also membranartiges Zwischenstück 323 verbunden, das kurz oberhalb der beiden Elektroden-Anordnungen 34, 35 endet. Mittels des Zwischenstücks werden Auslenkungen der Verlängerung 322, die z.B durch von außen auf sie einwirkende Vibrationen bedingt sind, von den Elektroden-Anordnungen 34, 35 weitgehend ferngehalten.

Im Betrieb erzeugen die erwähnten Druckschwankungen Auslenkungen der Sensorfahne 31 in Richtung senkrecht zu ihren Hauptflächen 311, 312. Diese Auslenkungen werden durch die Membran 33 auf die erste Elektroden-Anordnung 34 derart übertragen, daß sie in der Zeichenebene der Fig. 3 sich entweder geringfügig nach unten oder nach oben bewegt. Dadurch entfernt sich die Elektrode 341 entweder von der Gegenelektrode 351 und nähert sich zugleich der Gegenelektrode 352 oder nähert sich der Gegenelektrode 351 und entfernt sich zugleich von der Gegenelektrode 352. Diese Bewegungen führen aber zu Kapazitätsänderungen der beiden von der Elektrode 341 und der Gegenelektrode 351 bwz. von der Elektrode 341 und der Gegenelektrode 352 gebildeten Kapazitäten.

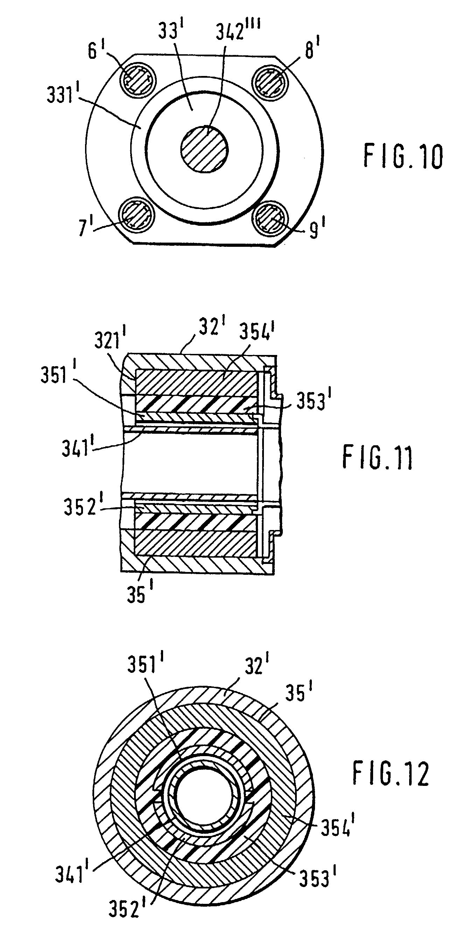

In den Fig. 8 bis 12 ist ein Ausführungsbeispiel eines Wirbelsensors dargestellt, der in die bei der Referierung der US-A 47 16 770 erwähnte Hauptbohrung des Staukörpers eingesetzt werden kann, und zwar sind jeweils Schnittdarstellungen gewählt. So zeigen die Fig. 8 und 9 den Wirbelsensor in zwei zueinander um 90° versetzten Längsschnitten, die Fig. 10 und 12 zwei Querschnitte und die Fig. 11 ein Detail des Längsschnitts der Fig. 8 in leicht vergrößertem Maßstab.

In den Fig. 8 bis 12 hat der kapazitive Wirbelsensor 3' eine die Öffnung der Hauptbohrung im Staukörper und in der Wand des Meßrohrs 2' überdeckende Membran 33'. Diese Membran hat eine fluid-zugewandte erste Oberfläche und eine fluid-abgewandte zweite Oberfläche. Die Membran 33' verschließt die Öffnung 22 fluiddicht, so daß selbst bei einem höchsten zulässigen Fluiddruck kein Fluid zur Mantelfläche 21 des Meßrohrs 2 gelangen kann.

Dies geschieht z.B. mittels einer ringförmigen Dichtung 5', die zwischen einer in der Wand 21' von außen her, z.B. durch Fräsen, gebildeten ebenen Auflagefläche 23' und einem ringförmigen Rand 331" der Membran 33' eingesetzt ist. Der Rand 331" ist höher als die Dicke der Membran 33'.

An der ersten Oberfläche der Membran 33' ist eine in die Hauptbohrung des Staukörpers ragende Sensorhülse 51 befestigt, die kürzer als der Durchmesser des Meßrohrs 2' ist.

An der zweiten Oberfläche der Membran 33' ist eine hülsen-förmige erste Elektroden-Anordnung 34' befestigt, die mindestens eine Elektrode 341' umfaßt. An der Übergangsstelle der ersten Elektroden-Anordnung 34' und der Sensorhülse 51 zur Membran 33' befindet sich ein massives Übergangsstück 342'. Dessen der Elektroden-Anordnung 34' zugewandter Teil 342" ist etwa so hoch wie der fluid-abgewandte Teil 331''' des Randes 331' der Membran 33'. Der der Sensorhülse 51 zugewandte Teil 342''' des Übergangsstücks 342' ist etwas niedriger als der Teil 342" und dessen Durchmesser gleich dem Außen-Durchmesser der Sensorhülse 51.

Eine Gehäusekappe 32' umschließt die erste Elektroden-Anordnung 34' sowie die Membran 33' und ist, z.B. mittels vier Schrauben 6', 7', 8', 9', am Meßrohr 2' befestigt. Die Gehäusekappe 32' enthält eine zweite Elektroden-Anordnung 35' mit einer ersten und einer zweiten Gegenelektrode 351', 352'. die jeweils etwa halbkreis-förmig ausgebildet sind.

Die zweite Elektroden-Anordnung 35' wird bevorzugt als Vorfertigungsteil hergestellt, das nach seiner Fertigstellung in einer entsprechenden Sackbohrung 321' der Gehäusekappe 32', z.B. durch Einschrumpfen oder mittels eines Preßsitzes fixiert wird.

Die zweite Elektroden-Anordnung 35' umfaßt, von innen nach außen gesehen, die beiden Gegenelektroden 351', 352', einen Isoliermaterialring 353' und einen Metallring 354', der in der Sackbohrung 321' der Gehäusekappe 32' sitzt.

Von jeder Gegenelektrode 351', 352' führt eine jeweilige Verbindungsleitung 355', 356' zu einer Stecker-Anordnung 357', die am Ende einer rohr-artigen Verlängerung 322' der Gehäusekappe 32' angeordnet ist und über die die von der Elektrode 341' und den Gegenelektroden 351', 352' gebildeten Kapazitäten mit einer nicht dargestellten Meßschaltung verbunden werden können.

Die Verlängerung 322' ist mit den übrigen Teilen der Gehäusekppe 32' über ein dünner-wandiges, also membranartiges Zwischenstück 323' verbunden, das kurz oberhalb der beiden Elektroden-Anordnungen 34', 35' endet. Mittels des Zwischenstücks werden Auslenkungen der Verlängerung 322', die z.B durch von außen auf sie einwirkende Vibrationen bedingt sind, von den Elektroden-Anordnungen 34', 35' weitgehend ferngehalten.

Im Betrieb erzeugen die erwähnten Druckschwankungen Auslenkungen der Sensorhülse 51, die im wesentlichen senkrecht zur Strömungsrichtung sind. Diese Auslenkungen werden durch die Membran 33' auf die erste Elektroden-Anordnung 34' übertragen. Dadurch entfernt sich die Elektrode 341' entweder von der Gegenelektrode 351' und nähert sich zugleich der Gegenelektrode 352' oder nähert sich der Gegenelektrode 351' und entfernt sich zugleich von der Gegenelektrode 352'. Diese Bewegungen führen aber zu Kapazitätsänderungen der beiden von der Elektrode 341' und der Gegenelektrode 351' bwz. von der Elektrode 341' und der Gegenelektrode 352' gebildeten Kapazitäten.

Bei beiden Varianten der Erfindung sind die Auswirkungen, welche auf das Meßrohr 2 bzw. 2' von außen einwirkende Beschleunigungen, z.B. in der Form von Stößen oder Vibrationen, auf das von den obigen Kapazitäten abgegebene Nutzsignal haben können, weitgehend wie folgt kompensiert:

Die Masse der Sensorfahne 31 bzw. der Sensorhülse 51 ist größer als die Masse der ersten Elektroden-Anordnung 34 bzw. 34'.

Ferner ist das Flächenträgheitsmoment der Sensorfahne 31 bzw. der Sensorhülse 51 an der ersten Oberfläche der Membran 33 bzw. 33' etwa gleich dem Flächenträgheitsmoment der ersten Elektroden-Anordnung 34 bzw. 34' an der zweiten Oberfläche der Membran 33 bzw. 33' gemacht.

Schließlich ist die Gehäusekappe 32 bzw. 32' so biegesteif dimensioniert, daß sie sich bei einer größten zulässigen, auf das Meßrohr 2 bzw 2' einwirkenden Beschleunigung nicht verbiegt.

Durch diese Bemessung der Flächenträgheitsmomente und Massen ergibt sich folgendes Verhalten bei von außen einwirkenden Vibrationen: Es sei angenommen, daß in Fig. 3 die Sensorfahne 31 und die erste Elektroden-Anordnung 34 in der Zeichenebene abwärts beschleunigt werden. Wegen der größeren Masse der Sensorfahne 31 wirkt auf sie daher eine größere Kraft als die entsprechende Kraft auf die Elektroden-Anordnung 34.

Diese größere Kraft überträgt die Membran 33 auf die Elektroden-Anordnung 34 in Gegenrichtung; die auf sie wirkende resultierende Kraft ist somit aufwärts gerichtet, so daß die Elektroden-Anordnung sich aufwärts bewegt und somit trotz der Vibration eine kleine Kapazitätsänderung resultiert.

Somit wird von der Erfindung zugelassen, daß auf die Membran Drehmomente einwirken, die entsprechend der oben referierten EP-A 549 945 frei von solchen Drehmomenten sein soll.

## Patentansprüche

1. Wirbelströmungsaufnehmer (1) zur Messung der Strömungsgeschwindigkeit und/oder des Volumendurchflusses eines in einem Meßrohr (2) in einer Strömungsrichtung fließenden Fluids
- mit einem entlang eines Durchmessers des Meßrohrs angeordneten und an mindestens einer Fixierstelle (41) mit dem Meßrohr verbundenen Staukörper (4), der der Erzeugung Kármán'scher Wirbel dient,
- mit einem kapazitiven, auf von den Wirbeln erzeugte Druckschwankungen ansprechenden Wirbelsensor (3), der stromabwärts vom Staukörper in eine wandseitige Öffnung (22) des Meßrohrs, diese zu dessen Mantelfläche hin abdichtend, eingesetzt ist, deren Zentrum zusammen mit dem Zentrum der Fixierstelle auf einer Mantellinie des Meßrohrs liegt, und der folgende Merkmale aufweist:
-- eine die Öffnung überdeckende Membran (33) mit einer fluid-zugewandten ersten Oberfläche und einer fluid-abgewandten zweiten Oberfläche,
-- eine an der ersten Oberfläche der Membran befestigte, biegesteife, dünne Sensorfahne (31), die kürzer als der Durchmesser ist, mit ebenen Hauptflächen (311, 312), die mit der Mantellinie des Meßrohrs fluchten,
-- eine an der zweiten Oberfläche der Membran befestigte, hülsen-förmige erste Elektroden-Anordnung (34), die mindestens eine Elektrode (341) umfaßt,
-- eine die erste Elektroden-Anordnung und die Membran umschließende, am Meßrohr fixierte Gehäusekappe (32), die eine zweite Elektroden-Anordnung (35) mit mindestens einer Gegenelektrode (351, 352) enthält,
-- die Masse der Sensorfahne (31) ist größer als die Masse der ersten Elektroden-Anordnung (34) gemacht,
-- das Flächenträgheitsmoment der Sensorfahne an der ersten Oberfläche der Membran ist etwa gleich dem Flächenträgheitsmoment der ersten Elektroden-Anordnung an der zweiten Oberfläche der Membran gemacht, und
-- die Gehäusekappe (32) ist so biegesteif dimensioniert, daß sie sich bei einer größten zulässigen, auf das Meßrohr (2) einwirkenden Beschleunigung nicht verbiegt.

2. Wirbelströmungsaufnehmer zur Messung der Strömungsgeschwindigkeit und/oder des Volumendurchflusses eines in einem Meßrohr (2') in einer Strömungsrichtung fließenden Fluids
- mit einem entlang eines Durchmessers des Meßrohrs angeordneten und an mindestens einer Fixierstelle mit dem Meßrohr verbundenen Staukörper, der der Erzeugung Kármán'scher Wirbel dient und eine in Richtung dieses Durchmessers sowie durch das Meßrohr hindurch verlaufende Hauptbohrung und mindestens eine die Hauptbohrung mit dem Fluid verbindende Nebenbohrung aufweist,
- mit einem kapazitiven, auf von den Wirbeln erzeugte Druckschwankungen ansprechenden Wirbelsensor (3'), der in die Hauptbohrung, die Mantelfläche des Meßrohrs gegen das Fluid abdichtend, eingesetzt ist und der folgende Merkmale aufweist:
-- eine ein meßrohr-seitiges Ende der Hauptbohrung überdeckende Membran (33') mit einer fluid-zugewandten ersten Oberfläche und einer fluid-abgewandten zweiten Oberfläche,
-- eine an der ersten Oberfläche der Membran befestigte, biegesteife erste Sensorhülse (51),
-- eine an der zweiten Oberfläche der Membran befestigte, hülsen-förmige erste Elektroden-Anordnung (34'), die mindestens eine Elektrode (341') umfaßt,
-- eine die erste Elektroden-Anordnung und die Membran umschließende, am Meßrohr fixierte Gehäusekappe (32'), die eine zweite Elektroden-Anordnung (35') mit mindestens einer Gegenelektrode (351', 352') enthält,
-- die Masse der Sensorhülse (51) ist größer als die Masse der ersten Elektroden-Anordnung (34') gemacht,
-- das Flächenträgheitsmoment der Sensorhülse an der ersten Oberfläche der Membran ist etwa gleich dem Flächenträgheitsmoment der ersten Elektroden-Anordnung an der zweiten Oberfläche der Membran gemacht, und
-- die Gehäusekappe (32') ist so biegesteif dimensioniert, daß sie sich bei einer größten zulässigen, auf das Meßrohr (2') einwirkenden Beschleunigung nicht verbiegt.

## Claims

1. A vortex flow sensor (1) for measuring the flow velocity and/or the volume flow rate of a fluid flowing in one direction of flow in a measuring tube (2)
- with a bluff body (4) which is arranged along a diameter of the measuring tube, is connected to the measuring tube at at least one fixing location (41) and serves to generate Kármán vortices,
- with a capacitive vortex sensing element (3) which responds to pressure fluctuations generated by the vortices, is inserted into a wall opening (22) in the measuring tube downstream of the bluff body, sealing off this hole relative to the circumferential surface of said measuring tube, and the center of which lies, together with the center of the fixing location, on a generatrix of the measuring tube, and has the following features:
-- a diaphragm (33) which covers the opening and which has a first surface facing toward the fluid and a second surface facing away from the fluid,
-- a flexurally stiff thin sensor vane (31) is attached to the first surface of the diaphragm and is shorter than the diameter, having flat main surfaces (311, 312) which are in alignment with the gene-ratrix of the measuring tube,
-- a sleeve-shaped first electrode arrangement (34) is attached to the second surface of the diaphragm and comprises at least one electrode (341),
-- a housing cap (32) which surrounds the first electrode arrangement and the diaphragm, is fixed on the measuring tube and contains a second electrode arrangement (35) with at least one counterelectrode (351, 352),
-- the mass of the sensor vane (31) is made greater than the mass of the first electrode arrangement (34),
-- the geometrical moment of inertia of the sensor vane at the first surface of the diaphragm is made approximately equal to the geometrical moment of inertia of the first electrode arrange-ment at the second surface of the diaphragm, and
-- the housing cap (32) is dimensioned to be of sufficient flexural stiffness to ensure that it does not bend in the case of a maximum permissible acceleration acting on the measuring tube (2).

2. A vortex flow sensor for measuring the flow velocity and/or the volume flow rate of a fluid flowing in one direction of flow in a measuring tube (2')
- with a bluff body which is arranged along a diameter of the measuring tube, is connected to the measuring tube at at least one fixing location, serves to generate Kärmän vortices and has a main hole, running in the direction of this diameter and through the measuring tube, and at least one secondary hole, which connects the main hole to the fluid,
- with a capacitive vortex sensing element (3') which responds to pressure fluctuations generated by the vortices, is inserted into the main hole, sealing off the circumferential surface of the measuring tube from the fluid, and has the following features:
-- a diaphragm (33') which covers a measuring-tube end of the main hole and which has a first surface facing toward the fluid and a second surface facing away from the fluid,
-- a flexurally stiff sensor sleeve (51) is attached to the first surface of the diaphragm,
-- a sleeve-shaped first electrode arrangement (34') is attached to the second surface of the diaphragm and comprises at least one electrode (341'),
-- a housing cap (32') which surrounds the first electrode arrangement and the diaphragm, is fixed on the measuring tube and contains a second electrode arrangement (35') with at least one counterelectrode (351', 352'),
-- the mass of the sensor sleeve (51) is made equal to the mass of the first electrode arrangement (34'),
-- the geometrical moment of inertia of the sensor sleeve at the first surface of the diaphragm is made approximately equal to the geometrical moment of inertia of the first electrode arrange-ment at the second surface of the diaphragm, and
-- the housing cap (32') is dimensioned to be of sufficient flexural stiffness to ensure that it does not bend in the case of a maximum permissible acceleration acting on the measuring tube (2').

## Revendications

1. Capteur d'écoulement tourbillonnaire (1) pour mesurer la vitesse d'écoulement et/ou le débit volumétrique d'un fluide s'écoulant dans un tube de mesure (2) suivant une direction d'écoulement, comprenant :
- un corps (4) formant chicane disposé le long d'un diamètre du tube de mesure et relié au tube de mesure au niveau au moins d'un point de fixation (41), lequel corps formant chicane sert à produire des tourbillons de Karman,
- un détecteur capacitif (3) de tourbillons réagissant aux variations de pression produites par les tourbillons, lequel détecteur de tourbillons est monté en aval du corps formant chicane, dans une ouverture (22), côté paroi, du tube de mesure, rendant cette ouverture étanche en direction de la surface latérale dudit tube, ouverture dont le centre coïncide avec le centre du point de fixation sur une ligne latérale du tube de mesure, lequel détecteur présente les caractéristiques suivantes :
-- une membrane (33) recouvrant l'ouverture, comprenant une première surface tournée vers le fluide et une seconde surface placée à l'opposé du fluide,
-- un drapeau (31) de détecteur, mince et résistant aux flexions, fixé sur la première surface de la membrane, lequel drapeau est plus court que le diamètre et comprenant des surfaces principales plates (311, 312) qui sont alignées avec la ligne latérale du tube de mesure,
-- un premier dispositif d'électrodes (34), en forme de douille, fixé sur la seconde surface de la membrane, lequel dispositif d'électrodes comprend au moins une électrode (341),
-- un couvercle de boîtier (32) fixé sur le tube de mesure et entourant le premier dispositif d'électrodes et la membrane, lequel couvercle de boîtier contient un second dispositif d'électrodes (35) comprenant au moins une contre-électrode (351, 352),
-- la masse du drapeau (31) du détecteur est rendue supérieure à la masse du premier dispositif d'électrodes (34),
-- le moment d'inertie géométrique du drapeau du détecteur sur la première surface de la membrane est rendu sensiblement égal au moment d'inertie géométrique du premier dispositif d'électrodes sur la seconde surface de la membrane, et
-- le couvercle (32) du boîtier est dimensionné pour résister aux flexions, de façon telle qu'il ne se déforme pas lors d'une accélération admissible la plus forte possible agissant sur le tube de mesure (2).

2. Capteur d'écoulement tourbillonnaire pour mesurer la vitesse d'écoulement et/ou le débit volumétrique d'un fluide s'écoulant dans un tube de mesure (2') suivant une direction d'écoulement, comprenant :
- un corps formant chicane disposé le long d'un diamètre du tube de mesure et relié au tube de mesure au niveau au moins d'un point de fixation, lequel corps formant chicane sert à produire des tourbillons de Karman, et un perçage principal s'étendant en direction de ce diamètre, ainsi qu'à travers le tube de mesure et au moins un perçage secondaire reliant le perçage principal au fluide,
- un détecteur capacitif (3') de tourbillons réagissant aux variations de pression produites par les tourbillons, lequel détecteur de tourbillons est monté dans le perçage principal, assurant l'étanchéité de la surface latérale du tube de mesure contre le fluide, lequel détecteur présente les caractéristiques suivantes :
-- une membrane (33') recouvrant une extrémité, côté tube de mesure, du perçage principal, comprenant une première surface tournée vers le fluide et une seconde surface placée à l'opposé du fluide,
-- une première douille (51) de détecteur résistant aux flexions et fixée sur la première surface de la membrane,
-- un premier dispositif d'électrodes (34'), en forme de douille, fixé sur la seconde surface de la membrane, lequel dispositif d'électrodes comprend au moins une électrode (341'),
-- un couvercle de boîtier (32') fixé sur le tube de mesure et entourant le premier dispositif d'électrodes et la membrane, lequel couvercle de boîtier contient un second dispositif d'électrodes (35') comprenant au moins une contre-électrode (351', 352'),
-- la masse de la douille (51) du détecteur est rendue supérieure à la masse du premier dispositif d'électrodes (34'),
-- le moment d'inertie géométrique de la douille du détecteur sur la première surface de la membrane est rendu sensiblement égal au moment d'inertie géométrique du premier dispositif d'électrodes sur la seconde surface de la membrane, et
-- le couvercle (32') du boîtier est dimensionné pour résister aux flexions, de façon telle qu'il ne se déforme pas lors d'une accélération admissible la plus forte possible agissant sur le tube de mesure (2').
